# EUROPÄISCHE PATENTSCHRIFT

(11) **EP 1 245 421 B1**
(45) Veröffentlichungstag und Bekanntmachung des Hinweises auf die Patenterteilung: **27.12.2006**
(21) Anmeldenummer: 02002317.2
(22) Anmeldetag: 31.01.2002
(51) Int. Cl.: B60J 10/00, B60J 10/08

(54) **Sicherungseinrichtung für eine Türscheibe eines Kraftfahrzeugs**
Safety device for a motor vehicle door panel
Dispositif de sécurité pour une vitre de porte d'un véhicule automobile

(30) Priorität: 27.03.2001 DE 10115124
(43) Veröffentlichungstag der Anmeldung: 02.10.2002
(73) Patentinhaber: Dr.Ing. h.c.F. Porsche Aktiengesellschaft, 70435 Stuttgart (DE)
(72) Erfinder: Schlachter, Reimund, 75417 Mühlacker (DE); Morlok, Horst, 71287 Weissach (DE)

(56) Entgegenhaltungen:
- EP-A- 0 662 400
- EP-A- 0 678 412
- GB-A- 2 353 553

## Beschreibung

Die Erfindung bezieht sich auf einen Türrahmen für ein Kraftfahrzeug mit einer Sicherungseinrichtung für eine Türscheibe nach dem Oberbegriff des Patentanspruchs 1.

Aus der DE 693 07 117 T2 ist ein Türrahmen bekannt, der in einer Gehrungsecke ein ausfüllendes Eckstück aufweist, das einerseits dem Formverlauf des eckigen, äußeren Türausschnitts folgt und andererseits eine innere gebogene Kante aufweist, die dem äußeren Radius des gebogenen Bereichs des Trägerprofils der Tür entspricht. Eine gattungsgemäße Sicherungseinrichtung ist aus der EP 0662400 A bekannt.

Aufgabe der Erfindung ist es, eine Sicherungseinrichtung für eine Türscheibe eines Kraftfahrzeugs zu schaffen, die einfach zwischen einem Türrahmen und einem Dichtungselement zu montieren ist und eine stabile Positionierung der Scheibe in geschlossener Scheibenstellung gewährleistet.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß das Dichtungselement für die Scheibe über die Sicherungseinrichtung im Türrahmen festgehalten wird und somit kein mißbräuchlicher Eingriff in den Innenraum des Fahrzeugs möglich ist, um beispielsweise ein Gerät einzuführen, um die Tür widerrechtlich zu öffnen. Hierzu ist in einer Gehrungsecke des Türrahmens eine Sicherungseinrichtung angeordnet, welche eine mit dem Türrahmen verbindbare Eckplatte und einen im Dichtungselement gehaltenen Sperrriegel umfaßt, welcher die Eckplatte bereichsweise über- oder untergreift und zwischen dem Dichtungselement und dem Sperriegel angeordnet ist.

Die Eckplatte ist unmittelbar in der Gehrungsecke der Tür angeordnet und füllt ein vom Dichtungsbogen bis zum eckigen Profilrahmen entstehenden Freiraum aus. Insbesondere ist die Eckplatte dreieckförmig ausgebildet und ist im Türrahmen zwischen abgewinkelten Schenkeln des Türprofils und einem inneren Begrenzungsrahmen des Türprofils über korrespondierende Klemmmittel und Anformungen gehalten. Der Sperrriegel übergreift zum Festsetzen der Platte eine Flächenspitze der Eckplatte, so daß diese zwischen dem Dichtungsprofil und dem Türprofil angeordnet ist.

Damit ein stabil gehaltenes und nicht durch eine Gewalteinwirkung aufbiegbares Dichtungselement im Türrahmen erzielbar ist, besteht der Sperrriegel aus einem in einer Ecke des Dichtungselements angeordnetem Winkelelement, welches eine ebene Riegelplatte mit einer Abwinkelung aufweist. Die Riegelplatte ist mit einem Aufnahmeabstand zur Auflagefläche des Trägerprofils angeordnet, um die Flächenspitze der Eckplatte aufnehmen zu können. Eine integrierte Anordnung des Sperrriegels im Dichtungselement der Scheibe wird erzielt, indem der Sperrriegel in das Dichtungselement mittels einer Gummiverbindung eingespritzt befestigbar ist.

Zur Festlegung der Eckplatte im Profilrahmen bestehen die korrespondierenden Klemmmittel an der Eckplatte aus nasenartigen Anformungen, denen Ausprägungen am Türprofil gegenüberstehen. Diese Anformungen werden von den Ausprägungen übergriffen, wobei zusätzlich an der Eckplatte noch Federzungen angeordnet sind, die sich an den Schenkeln des Türprofils federnd abstützen. Desweiteren weist die Eckplatte vorderseitig eine ausgerundete Kante auf, die mit einem Profilrand und beabstandet hierzu mit gegenüberstehenden vorstehenden Anformungen versehen sind und zwischen dem Profilrand und den Anformungen ein Rand des Trägerprofils angeordnet ist.

Ein Ausführungsbeispiel der Erfindung ist in den Zeichnungen dargestellt und wird im folgenden näher beschrieben.

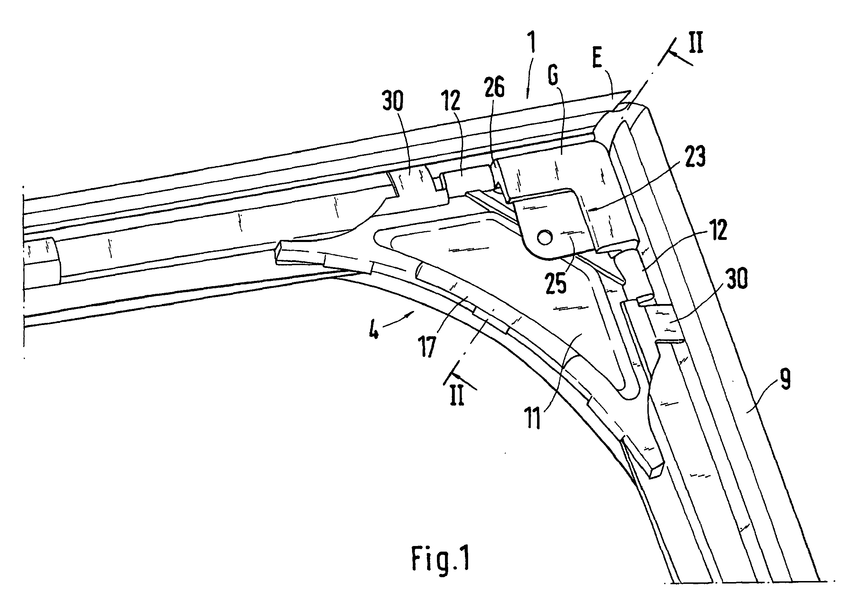

Es zeigen
- Fig. 1: eine Ansicht auf eine Sicherungseinrichtung in einer Gehrungsecke einer Fahrzeugtür mit Eckplatte und Sperriegel ohne Türrahmenprofil, vom Inneren des Fahrzeugs her gesehen,
- Fig. 2: einen Schnitt nach der Linie II-II der Fig. 1 durch die Gehrungsecke der Tür mit Türprofil, das in Fig. 1 nicht dargestellt ist,

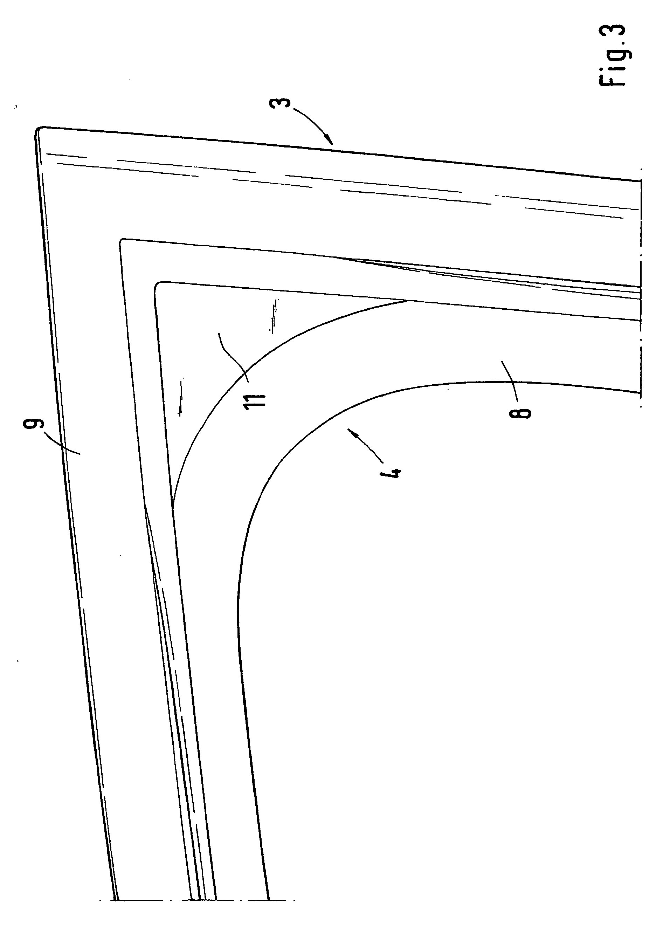

- Fig. 3: eine Ansicht auf die Gehrungsecke des Türprofils mit eingelegter Eckplatte, von außen des Fahrzeugs her gesehen und

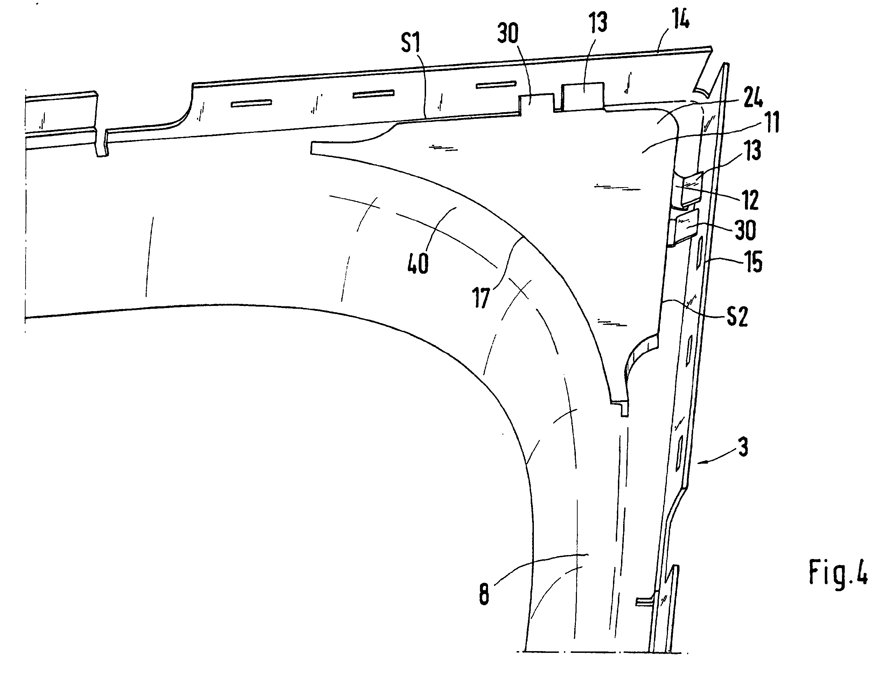

- Fig. 4: eine weitere Ansicht auf die Gehrungsecke des Türrahmenprofils mit eingesetztem Dichtungsprofil, von außen des Fahrzeugs her gesehen gem. Fig. 3.

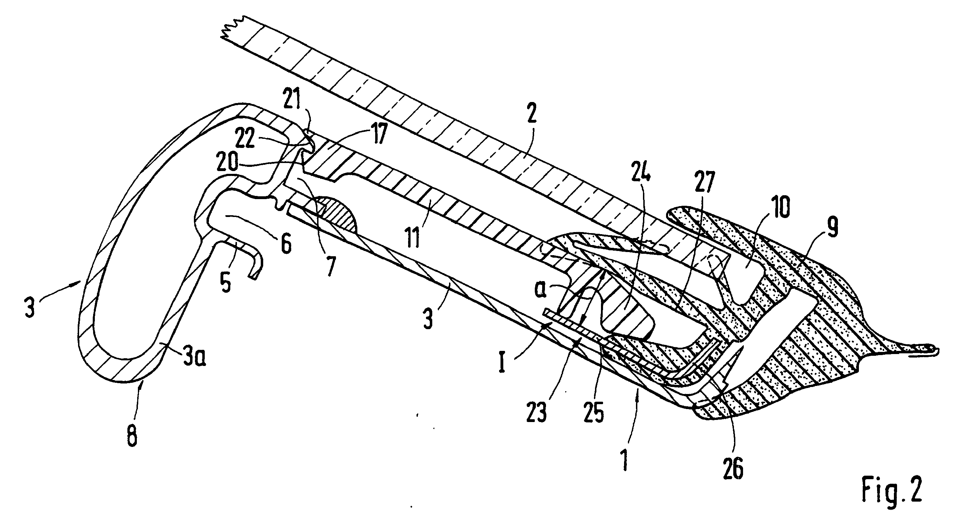

Die Sicherungseinrichtung 1 für eine Türscheibe 2 einer Fahrzeugtür mit Türrahmen 3 ist jeweils in einer Gehrungsecke 4 von Türen eines Kraftfahrzeugs angeordnet. Die Fahrzeugtür umfaßt im wesentlichen ein Türprofil 8 bestehend aus einem Hohlprofil 3a mit Stegen 5 und Aufnahmen 6, 7 bestehend, wie in Fig. 2 näher dargestellt ist. Mit dem Türprofil 8 ist ein profiliertes Dichtungselement 9 verbunden, in dem die Türscheibe 2 seitlich in Nuten 10 geführt ist und mit einem oberen Rand in einer etwa horizontalen Nut des Dichtungselements 9 einfahrbar ist.

Die Sicherungseinrichtung 1 umfaßt eine dreieckförmige Eckplatte 11 im Türprofil 8 sowie einen sogenannten Sperrriegel 23 im Dichtungselement 9. Die Eckplatte 11 ist mit dem Sperrriegel 23 mittels einer gegeneinander abstützenden Verbindung miteinander in einer Eingriffstellung I, wie Fig. 2 näher zeigt. In dieser Stellung I ist eine Flächenspitze 24 der Eckplatte 11 in einer unter- bzw. übergriffenen Position zum Sperrriegel 23 angeordnet.

Die dreieckförmige Eckplatte 11 ist in der Gehrungsecke 4 des Profils 8 eingeklipst, wozu korrespondierende Klemmelemente 12, 13 an der Eckplatte 11 und am Profil 8 vorgesehen sind. Die Eckplatte 11 liegt zwischen abgewinkelten Schenkeln 14, 15 des Rahmenprofils 8, wobei die Randkanten S1 und S2 der Platte 11 dem Verlauf der Schenkel 14, 15 angepaßt sind. Ein die Randkante S1 und S2 verbindender ausgerundeter Rand 17 ist einer Ausrundung bzw. einer Kante 40 des Türprofils 8 zugerichtet und entsprechend diesem Verlauf ausgeführt.

An dieser Kante (Rand 17) sind vorstehende Anformungen 20 vorgesehen, die im Zusammenhang mit einer vorstehenden Anformung 21 in Form einer Randleiste 21 einen Profilrand 22 des Türprofils 8 zwischen sich aufnehmen.

Das Klemmelement an der Eckplatte 11 besteht aus mehreren vorragenden Anformungen 12, welche von entsprechenden Ausprägungen 13 bzw. von aufgestellten Blechlappen übergriffen werden.

Der Sperriegel 23 besteht vorzugsweise aus einem Blechwinkel, der in einer Ecke E des Gehrungswinkels 4 der Tür durch Umspritzen mit Gummi in das Dichtelement 9 integriert ist. Der Riegel 23 umfaßt eine ebene Riegelplatte 25 mit einer Abwinklung 26, wobei die Riegelplatte 25 im Abstand a zur Fläche 27 des Dichtungsprofils 9 derart angeordnet ist, daß die Flächenspitze 24 der Eckplatte 11 zwischengeschoben werden kann. Desweiteren sind an der Eckplatte 11 sogenannte Federzungen 30 zur Abstützung an den Profilschenkeln 14, 15 vorgesehen.

Der Zusammenbau des Dichtungselements 9 mit dem Türrahmen 3 bzw. dem Türprofil 8 erfolgt unter Einbeziehung der Sicherungseinrichtung 1. Die Eckplatte 11 wird mit der Flächenspitze 24 über die Platte 25 des Sperriegels 23 geschoben und danach wird die Eckplatte 11 in das Profil 8 eingeklipst und über die Klemmelemente 12, 13 im Türprofil 8 festgesetzt. Danach erfolgt ein Verklemmen des Dichtungselements 9 im Türprofil 8. Eine solche Sicherungseinrichtung 1 kann in jeder Gehrungsecke 4 einer Tür des Kraftfahrzeugs vorgesehen sein.

## Patentansprüche

1. Türrahmen für ein Kraftfahrzeug mit einer Sicherungseinrichtung für eine Türscheibe, wobei in dem Türrahmen ein Dichtungselement (9) eingeklemmt gehalten ist, in welchem außenseitig in seitlichen, integrierten Führungen eine verschiebbare Tür Scheibe (2) geführt ist, die stirnseitig in einer oberen Führung (10) des Dichtungselement (9) einfahrbar gehalten wird, **dadurch gekennzeichnet, daß** in mindestens einer Gehrungsecke (4) des Türrahmens (3) die Sicherungseinrichtung (1) angeordnet ist, welche eine mit dem Türrahmen (3) verbindbare Eckplatte (11) und einen im Dichtungselement (9) gehaltenen Sperrriegel (23) umfaßt, der die Eckplatte (11) bereichsweise übergreift und diese zwischen dem Dichtungselement (9) und dem Sperrriegel (23) hält.

2. Sicherungseinrichtung nach Anspruch 1, **dadurch gekennzeichnet, daß** die Eckplatte (11) dreieckförmig ausgebildet ist und im Türrahmen (3) zwischen abgewinkelten Schenkeln (14, 15) eines Türprofils (8) und einem inneren Begrenzungsrahmen (40) des Profils (8) über korrespondierende Klemmmittel (12, 13) und Anformungen (20, 21) festsetzbar ist und der Sperrriegel (23) eine Flächenspitze (24) der Eckplatte (11) übergreift und zwischen diesem und dem Türprofil (8) des Rahmens (3) angeordnet ist.

3. Sicherungseinrichtung nach den Ansprüchen 1 oder 2, **dadurch gekennzeichnet, daß** die Eckplatte (11) vorderseitig eine ausgerundete Kante (17) aufweist, die mit einem Rand (22) des Profils (8) und beabstandet hierzu mit gegenüberstehenden vorstehenden Anformungen (20, 21) versehen ist und zwischen dem Rand (22) und den Anformungen (20, 21) der Rand (22) des Profils (8) eingreifend haltend angeordnet ist.

4. Sicherheitseinrichtung nach den Ansprüchen 1, 2 oder 3, **dadurch gekennzeichnet, daß** der Sperrriegel (23) aus einem in einer Ecke (E) des Dichtungselements (9) angeordneten Winkelelement besteht, das eine ebene Riegelplatte (25) mit einer Abwinklung (26) aufweist und die Riegelfläche (25) mit einem Aufnahmeabstand (a) für die Eckplatte (11) zur Auflagefläche des Dichtungsprofils (9) angeordnet ist.

5. Sicherungseinrichtung nach einem oder mehreren der vorhergehenden Ansprüche, **dadurch gekennzeichnet, daß** der Sperrriegel (23) in das Dichtungselement (9) mittels einer Gummiverbindung (G) eingespritzt befestigbar ist.

6. Sicherungseinrichtung nach einem oder mehreren der vorhergehenden Ansprüche, **dadurch gekennzeichnet, daß** die Eckplatte (11) zwischen zwei etwa gleichlangen Seitenkanten (S1 und S2) die Ausrundung (17) aufweist, welche einer Ausrundung der Gehrungsecke (4) des Türprofils (8) entspricht.

7. Sicherungseinrichtung nach einem oder mehreren der vorhergehenden Ansprüche, **dadurch gekennzeichnet, daß** die korrespondierenden Klemmmittel an der Eckplatte (11) aus nasenartigen Anformungen (12) bestehen, denen Ausprägungen (13) am Trägerprofil (8) gegenüberstehen, welche von den Anformungen (12) umgriffen werden und daß an der Eckplatte (11) Federzungen (30) vorgesehen sind, die sich an den Schenkeln (14, 15) des Trägerprofils (8) federnd abstützen.

## Claims

1. A door frame for a motor vehicle with a security device for a door window, wherein a sealing member (9) is held clamped in the door frame, in which sealing member (9) a slidable door window (2) is guided on its outside in lateral, integrated guides and is retractably held at its end in an upper guide (10) of the sealing member (9), **characterised in that** the security device (1) is arranged in at least one mitred corner (4) of the door frame (3) and comprises a corner plate (11) which is connectable to the door frame (3), and a safety catch (23) which is held in the sealing member (9) and engages over part of the corner plate (11) and holds it between the sealing member (9) and the safety catch (23).

2. A security device according to claim 1, **characterised in that** the corner plate (11) is triangular and is securable in the door frame (3) between angled limbs (14, 15) of a door profile (8) and an inner boundary frame (40) of the profile (8) by complementary clamping means (12, 13) and formations (20, 21), and the safety catch (23) engages over a surface tip (24) of the corner plate (11) and is arranged between this and the door profile (8) of the frame (3).

3. A security device according to claim 1 or claim 2, **characterised in that** the corner plate (11) has, on its front side, a rounded edge (17) which is provided with a rim (22) of the profile (8) and, spaced apart therefrom, opposing projecting formations (20, 21), and the rim (22) of the profile (8) is arranged so as to be held in engagement between the rim (22) and the formations (20, 21).

4. A security device according to claim 1, 2 or 3, **characterised in that** the safety catch (23) comprises an angled member which is arranged in a corner (E) of the sealing member (9) and which has a flat catch plate (25) with a return (26), and the catch plate (25) is arranged spaced apart from the bearing surface of the sealing profile (9) by an amount (a) for receiving the corner plate (11).

5. A security device according to one or more of the preceding claims, **characterised in that** the safety catch (23) is fixable in the sealing member (9) by means of an injection-moulded rubber connection (G).

6. A security device according to one or more of the preceding claims, **characterised in that** the corner plate (11) has, between two side edges (S1 and S2) of approximately equal length, the rounding (17) which corresponds to a rounding of the mitred corner (4) of the door profile (8).

7. A security device according to one or more of the preceding claims, **characterised in that** the complementary clamping means on the corner plate (11) comprise projection-type formations (12) arranged opposite stampings (13) which are formed in the frame profile (8) and around which the formations (12) engage, and **in that** resilient tongues, (30) are provided on the corner plate (11) and are resiliently supported against the limbs (14, 15) of the frame profile (8).

## Revendications

1. Encadrement de porte d'un véhicule automobile pourvu d'un dispositif sécurisant la vitre de porte, tel qu'un joint d'étanchéité (9) est maintenu serré dans l'encadrement de porte et présente des rainures intégrées latérales sur sa face extérieure dans lesquelles une vitre de porte coulissante (2) est guidée tout en restant rentrée dans une rainure de guidage supérieure (10) du joint d'étanchéité (9) sur la face avant, **caractérisé en ce que** le dispositif de sécurité (1) est disposé dans au moins un coin à onglet (4) de l'encadrement de porte (3) et comprend une plaque d'angle (11) adaptable à l'encadrement de porte (3) et un verrou de sécurité (23) enserré dans le joint d'étanchéité (9) s'engageant par endroits au-dessus de la plaque d'angle (11) en la maintenant entre le joint d'étanchéité (9) et le verrou de sécurité (23).

2. Dispositif de sécurité selon la revendication 1, **caractérisé en ce que** la plaque d'angle (11) présente une configuration triangulaire et peut être immobilisée dans l'encadrement de porte (3) entre les côtés recourbés (14, 15) d'un profilé de porte (8) et un cadre de délimitation intérieur (40) dudit profilé (8) par des moyens de serrage correspondants (12, 13) et des saillies (20, 21), que le verrou de sécurité (23) vient en prise au-dessus de la pointe de surface (24) de la plaque d'angle (11) et qu'il est aménagé entre celui-ci et le profilé de porte (8) du cadre (3).

3. Dispositif de sécurité selon les revendications 1 ou 2, **caractérisé en ce que** la plaque d'angle (11) laisse apparaître une arête arrondie sur sa face avant (17) qui est pourvue du bord (22) du profilé (8) et de saillies (20, 21) en dépassant en vis-à-vis à des espacements réguliers et que le bord (22) du profilé (8) est disposé entre le bord (22) et les saillies (20, 21) en y étant maintenu assemblé.

4. Dispositif de sécurité selon les revendications 1, 2 ou 3, **caractérisé en ce que** le verrou de sécurité (23) consiste en un élément angulaire qui est disposé dans un coin (E) du joint d'étanchéité (9) et présente une plaque de verrouillage plane (25) avec une partie recourbée (26) et que ladite plaque de verrouillage (25) est disposée avec un écart récepteur (a) prévu pour loger la plaque d'angle (11) par rapport à la surface d'appui du profilé du joint d'étanchéité (9).

5. Dispositif de sécurité selon l'une ou plusieurs des revendications précédentes, **caractérisé en ce que** le verrou de sécurité (23) peut être fixé au joint d'étanchéité (9) par l'injection d'un composé caoutchouté (G).

6. Dispositif de sécurité selon l'une ou plusieurs des revendications précédentes, **caractérisé en ce que** la plaque d'angle (11) présente l'arrondi (17) entre deux arêtes des côtés (S1 et S 2) qui correspond à l'arrondi du coin à onglet (4) du profilé de porte (8).

7. Dispositif de sécurité selon l'une ou plusieurs des revendications précédentes, **caractérisé en ce que** les moyens de serrage correspondants sur la plaque d'angle (11) consistent en des ergots en saillie (12) auxquels font face des empreintes creusées en relief (13) dans le profilé porteur (8) et entourées par lesdites saillies (12) et que des languettes flexibles (30) sont prévues sur la plaque d'angle (11) pour prendre appui avec élasticité contre les côtés (14, 15) du profilé porteur (8).
